# FASCICULE DE BREVET EUROPEEN

(11) **EP 3 257 469 B1**
(45) Date de publication et mention de la délivrance du brevet: **18.12.2019**
(21) Numéro de dépôt: 17176392.3
(22) Date de dépôt: 16.06.2017
(51) Int. Cl.: A61C 8/00, B23H 7/02, B29C 67/00, A61C 13/00

(54) **PROCÉDÉ DE FABRICATION D'UN PILIER IMPLANTAIRE DE PROTHÈSE DENTAIRE PAR FABRICATION ADDITIVE ET ÉLECTROÉROSION ET INSTALLATION POUR LA MISE EN OEUVRE D'UN TEL PROCÉDÉ**
HERSTELLUNGSVERFAHREN EINES ABUTMENTS FÜR EINE ZAHNPROTHESE DURCH ADDITIVE HERSTELLUNG UND ELEKTROEROSION, UND ANLAGE FÜR DIE UMSETZUNG EINES SOLCHEN VERFAHRENS
METHOD FOR PRODUCING A DENTAL PROSTHESIS IMPLANT PILLAR BY ADDITIVE MANUFACTURING AND SPARK MACHINING AND FACILITY FOR IMPLEMENTING SUCH A METHOD

(30) Priorité: 16.06.2016 FR 1655629
(43) Date de publication de la demande: 20.12.2017
(73) Titulaire: Mojito, 83570 Cotignac (FR)
(72) Inventeur: FOREST, Alexandre, 30300 FOURQUES (FR)
(74) Mandataire: Santarelli

(56) Documents cités:
- EP-A1- 2 886 079
- EP-B1- 0 716 584
- WO-A1-2013/167905
- JP-A- H05 161 662
- US-B2- 8 778 443

## Description

La présente demande concerne un procédé de fabrication d'un pilier implantaire ainsi qu'une installation permettant de mettre en œuvre le procédé.

En implantologie dentaire, la réalisation des prothèses sur implant se fait via une interface située entre l'implant et la couronne : le pilier dentaire.

Le pilier dentaire (également dit pilier implantaire) a un rôle prépondérant dans la réussite du cas implantaire de par le fait qu'il assure à la fois une transmission des efforts occlusaux et une composante esthétique par la cicatrisation des tissus gingivaux en garantissant le respect de l'espace biologique.

Par conséquent, chaque pilier est propre à un implant et une couronne, laquelle est réalisée au cas par cas. Pour que le positionnement du pilier soit bon, il faut conformer précisément une partie basse du pilier, appelée insert, en fonction de l'implant, et une partie haute du pilier, appelée corps, en fonction de la couronne qui représente la dent à remplacer.

Pour cela, les piliers peuvent donc être fabriqués selon différents procédés.

Par exemple, ils peuvent être fabriqués selon un procédé standard qui consiste à acheter des piliers de formes génériques sur catalogue puis à les faire retoucher par le prothésiste afin de les conformer aux besoins des secteurs anatomiques concernés.

Selon un autre exemple, ils peuvent être fabriqués selon un procédé personnalisé qui consiste notamment en un usinage classique monobloc à partir d'une galette de matériau, généralement de chrome-cobalt ou de titane ou en une sur-coulée par la technique de la cire perdue sur pilier calcinable. Ce procédé permet d'obtenir des géométries idoines avec les morphologies prothétiques et anatomiques du patient.

Or un tel procédé est long et couteux, principalement du fait que les piliers sont alors réalisés au cas par cas.

Selon encore un autre exemple, il existe une technologie dite « hybride » dans laquelle une partie du pilier destinée à coopérer avec l'implant, c'est-à-dire l'insert, est réalisée de manière standard, usinée en série, souvent en métal, et une autre partie du pilier, destinée à recevoir la couronne, c'est à dire le corps, est personnalisée, réalisée au cas par cas, par usinage, en zircone par exemple.

Une telle technologie est avantageuse pour des productions de toutes petites séries dans des laboratoires de prothèses.

Cependant, une telle réalisation du pilier en deux parties peut présenter des difficultés en ce qui concerne leur assemblage l'une à l'autre et requiert généralement un temps de fabrication important.

On connait aussi par exemple le document WO 2013/167905 qui présente un procédé de fabrication d'un élément dentaire en partie par fabrication additive et électroérosion.

L'objet de la présente demande vise à proposer un procédé amélioré pour la production dans un contexte industriel, pouvant en outre mener à d'autres avantages.

A cet effet, est proposé selon un premier aspect, un procédé de fabrication d'au moins un pilier implantaire de prothèse dentaire, un pilier implantaire comportant un insert en partie basse, comportant une connectique configurée pour relier le pilier à un implant, et un corps en partie haute configuré pour supporter une couronne, le procédé comportant :
- Une étape de réalisation d'une ébauche de pilier implantaire comportant :
   - Une étape de réalisation spécifique du corps du pilier implantaire comportant une étape de réalisation du corps par fabrication additive, sur un plateau de fabrication additive, en commençant par un sommet du corps ; et
   - Une étape de réalisation d'une ébauche d'insert dans un prolongement du corps, comportant une sous-étape de réalisation par fabrication additive d'une ébauche de connectique sur le même plateau de fabrication additive ;
- L'au moins une ébauche est positionnée dans une enceinte de dispositif d'électroérosion, puis l'enceinte du dispositif d'électroérosion est close et remplie de liquide diélectrique ; et
- Une étape de réalisation de la connectique, comportant au moins une étape d'électroérosion de l'ébauche de connectique par enfonçage d'au moins une électrode sur l'ébauche de connectique, l'au moins une électrode comportant une empreinte représentant une forme complémentaire de la connectique de l'insert à réaliser.

Selon un exemple de mise en œuvre particulièrement intéressant, l'étape d'électroérosion de l'ébauche de connectique est réalisée sur le même plateau de fabrication additive. Toutefois, les connectiques peuvent être reprises hors du plateau de fabrication additive, par exemple en disposant le pilier correspondant dans un support individuel.

Un tel procédé permet ainsi de réaliser un pilier implantaire d'un seul tenant tout en ayant un corps personnalisé et un insert standard qui, grâce à l'électroérosion, présente les caractéristiques requises, par exemple en ce qui concerne un état de surface ou des tolérances géométriques pour être assemblé avec un implant.

De plus, l'électroérosion permet d'obtenir de meilleurs résultats en termes d'état de surface notamment, en particulier parce que l'électroérosion génère moins, voire pas, de problèmes vibratoires par comparaison à un usinage standard dans ce contexte. Ceci est en particulier lié au fait que, pendant une étape d'électroérosion, il n'y a pas de contact entre l'électrode et l'objet qu'elle rectifie.

Ainsi, un tel procédé permet aussi un meilleur rendement de production et un prix de revient abaissé comparativement à une méthode classique.

Le liquide diélectrique est par exemple un liquide synthétique ou minéral.

En vue de réaliser la connectique, l'étape d'électroérosion comporte par exemple une étape de mise sous tension de l'au moins une électrode dans le liquide diélectrique et une étape de descente progressive de l'électrode par rapport à l'ébauche de connectique de l'insert pendant laquelle une partie de l'ébauche de connectique de l'insert est sublimée.

La connectique présente par exemple au final une rugosité (Ra) comprise entre 0,2 µm et 0,8 µm ; cette rugosité peut être ajustée en fonction des besoins, par exemple en modifiant la vitesse de descente de l'électrode sur l'ébauche ou l'intensité du courant induit dans l'électrode.

La mise sous tension implique par exemple que l'électrode reçoit une très forte intensité, c'est-à-dire par exemple une intensité de l'ordre d'environ une dizaine d'ampères, par exemple 10 A (Ampère). Il s'agit par exemple d'impulsions.

La vitesse de descente de l'électrode est par exemple de l'ordre de 1 mm/h (un millimètre par heure).

La vitesse de descente de l'électrode est par exemple comprise entre environ 1 mm/h (millimètre par heure) et 5 mm/h lors d'une approche de l'électrode dans une phase d'ébauche, puis d'environ 1 mm/h quand l'électrode est dans la phase dite de finition ; attendu qu'à chacune de ces phases, de la matière est sublimée.

Dans un exemple intéressant, une circulation de liquide est organisée. Ceci permet par exemple de minimiser voire éviter des bulles d'air, ainsi que de limiter voire éviter une souillure du liquide par des particules de matière sublimée.

Par exemple, à intervalles prédéfinis, par exemple toutes les 10 secondes, un cycle de débourrage est réalisé.

Lors d'un débourrage, par exemple, l'au moins une électrode est relevée et/ou des copeaux et/ou particules sont évacuées.

Selon un exemple de mise en œuvre particulièrement intéressant, au moins l'étape de réalisation du corps par fabrication additive comporte une étape de fusion de grains de matériau par un faisceau, par exemple un faisceau laser ou un faisceau d'électron.

Par exemple, au moins l'étape de réalisation du corps par fabrication additive comporte une étape d'impression d'un métal biocompatible, par exemple du chrome-cobalt ou du titane ou un alliage de titane.

Selon un exemple de mise en œuvre, l'étape de réalisation d'une ébauche de pilier implantaire comporte une étape de réalisation par fabrication additive d'un support sous forme de baguettes en réseau, au moins une partie du corps étant réalisée dans un prolongement d'au moins une partie du support.

La réalisation de tel support permet de conférer simplement et facilement une stabilité, un maintien, de chaque ébauche par rapport au plateau.

Selon un exemple de mise en œuvre, l'étape de réalisation de la connectique par électroérosion comporte une première étape d'électroérosion dans laquelle l'ébauche de connectique est électro-érodée par une électrode dite « grossière » à une première vitesse d'approche v₁ produisant une ébauche de connectique dite « dégrossie », puis une deuxième étape d'électroérosion dans laquelle l'ébauche de connectique dégrossie est électro-érodée par une électrode dite « fine » à une deuxième vitesse d'approche v₂, la deuxième vitesse d'approche v₂ étant inférieure à la première vitesse d'approche v₁.

Par exemple, l'électrode grossière est configurée pour réaliser un cône de la connectique et l'électrode fine est configurée pour réalisation une géométrie spécifique de la connectique, par exemple un hexagone ou une quelconque géométrie caractérisant une connectique de pilier dentaire.

Selon un exemple de mise en œuvre, le procédé comporte, préalablement à l'étape de réalisation d'une ébauche de pilier implantaire, une étape de définition de l'ébauche de pilier implantaire qui comporte une étape de définition géométrique du pilier implantaire à réaliser et une étape de définition d'une surépaisseur au moins autour de la connectique de l'insert.

Dans un exemple de mise en œuvre intéressant, un utilisateur reçoit par exemple un fichier numérique comportant les informations géométriques du pilier à réaliser.

Une étape de traitement permet par exemple ensuite de définir une surépaisseur autour d'au moins la connectique.

Une autre étape de traitement numérique permet aussi de définir un positionnement du pilier à réaliser sur le plateau de fabrication additive en fonction du positionnement de l'au moins une électrode qui est ensuite enfoncée sur l'ébauche de connectique pour réaliser la connectique.

Le positionnement du pilier comporte donc par exemple non seulement ses coordonnées cartésiennes sur une surface du plateau mais également son orientation sur le plateau.

Par ailleurs, le procédé comporte par exemple possiblement une étape d'alignement entre l'au moins une électrode et l'ébauche de connectique du pilier implantaire.

Selon un exemple de mise en œuvre, le procédé comporte :
- une pluralité d'étapes de réalisation d'une ébauche de pilier implantaire simultanément configurées pour réaliser une pluralité d'ébauches de pilier implantaire sur le même plateau de fabrication additive ; puis
- la mise en œuvre d'une pluralité d'étapes de réalisation de la connectique correspondante par électroérosion simultanément.

Comme précédemment, dans un mode de réalisation préféré, la mise en œuvre d'une pluralité d'étapes de réalisation de la connectique correspondante par électroérosion simultanément est effectuée sur le même plateau de fabrication additive.

Par exemple, le procédé comporte alors une étape de préparation des données numériques. Il comporte alors par exemple une étape de définition de chacune des ébauches de pilier implantaire ainsi qu'une étape de définition d'un positionnement de chaque ébauche de pilier implantaire sur le plateau de fabrication additive ainsi qu'un espacement entre les ébauches de sorte que chaque ébauche de connectique de chaque ébauche de pilier implantaire soit ensuite en vis-à-vis d'une électrode.

A titre d'exemple, un usinage classique requiert traditionnellement environ 15 minutes par connectique à un coût machine d'environ 80€ (euros) par heure, alors qu'un procédé selon un tel exemple de réalisation de la présente invention nécessite entre 6 heures et 15 heures pour environ 80 connectiques à un coût machine équivalant.

Ainsi un tel procédé est avantageux.

Est également proposé, selon un deuxième aspect, une installation pour la mise en œuvre d'un procédé de fabrication d'un pilier implantaire de prothèse dentaire comportant tout ou partie des caractéristiques susmentionnées.

L'installation comporte avantageusement :
- un plateau de fabrication additive comportant au moins un emplacement de réalisation d'une ébauche de pilier implantaire ; et
- un système de fabrication additive.

Le système de fabrication additive comporte par exemple de préférence :
- un distributeur de matériau pulvérulent configuré pour déposer une couche de matériau pulvérulent sur le plateau ;
- un générateur de faisceau configuré pour fusionner des grains du matériau pulvérulent, par exemple un générateur de faisceau laser ou de faisceau d'électron ; et
- une unité de commande configurée pour orienter le faisceau pour imprimer au moins une ébauche de pilier implantaire ;

L'installation comporte aussi :
- une enceinte de dispositif d'électroérosion ;
- un outil de maintien d'au moins une électrode, lequel outil comporte au moins une alvéole de positionnement et retenue d'une électrode ;
- au moins une électrode fixée dans l'au moins une alvéole de l'outil de maintien, l'au moins une électrode comportant une empreinte représentant une forme complémentaire de la connectique de l'insert à réaliser ;
- un logement de réception d'un support d'au moins une ébauche de pilier implantaire ;
- un générateur de courant configuré pour mettre l'au moins une électrode sous tension ;
- un système de remplissage configuré pour remplir l'enceinte de dispositif d'électroérosion d'un liquide diélectrique ;
- un mécanisme de déplacement de l'outil de maintien par rapport au support d'au moins une ébauche de pilier implantaire ; et
- une unité de commande configurée pour au moins contrôler le générateur de courant et réguler le mécanisme de déplacement de l'outil de maintien par rapport au support d'au moins une ébauche de pilier implantaire.

Dans un premier mode de réalisation de l'invention , l'installation comporte un dispositif de fabrication additive d'une part et un dispositif d'électroérosion d'autre part.

Et par exemple, le plateau est amovible par rapport à une enceinte du dispositif de fabrication additive et configuré pour pouvoir être positionné dans l'enceinte du dispositif d'électroérosion, formant ainsi ledit support d'au moins une ébauche de pilier implantaire.

Il s'agit par exemple d'une machine de fabrication additive et d'une machine d'électroérosion standard dans laquelle un emplacement pour le plateau est aménagé.

Dans un deuxième mode alternatif de réalisation de l'invention, le dispositif de fabrication additive et le dispositif d'électroérosion sont rassemblés en une seule machine. En d'autres termes, une seule machine permet de mettre en œuvre la fabrication additive et l'électroérosion.

Une électrode peut être de différentes matières conductrice, par exemple métallique. A titre d'exemples non limitatif une électrode peut être en cuivre, carbure, graphite, ou encore en tungstène.

Le courant est induit par impulsions. La matière en surface chauffe : il y a ainsi sublimation de la matière.

La matière en particule tombe alors vers un fond de l'enceinte.

De préférence, l'au moins une électrode est débouchante, c'est-à-dire traversée par un canal de part en part selon un axe longitudinal de l'électrode.

Ainsi, du liquide diélectrique remplissant l'enceinte en cours d'opération peut circuler via l'électrode.

Dans un exemple de réalisation, l'outil de maintien est relié à une borne négative du générateur, par exemple par une pince crocodile, et le plateau de fabrication additive est relié à une borne positive du générateur, par exemple également par une pince crocodile.

Le plateau de fabrication additive est par exemple en titane, ou en alliage chrome-cobalt, ou en acier, ou en inox.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 montre un exemple de définition de pilier implantaire à obtenir,
La figure 2 montre un exemple de définition d'une ébauche du pilier implantaire de la figure 1,
La figures 3 illustre une partie du pilier implantaire électro-érodée pour réaliser une connectique,
La figure 4 montre un exemple de plateau de fabrication additive comportant un agencement matriciel d'emplacements de réalisation de pilier,
La figure 5 présente une pluralité d'ébauches de pilier implantaire réalisées sur un même plateau de fabrication additive où chaque ébauche de connectique de chaque ébauche de pilier implantaire est positionnée par rapport à un emplacement de réalisation de pilier correspondant en fonction d'une future électrode,
Les figures 6 et 7 montrent en perspective, en vue extérieure et en coupe, un exemple de réalisation d'une électrode selon un mode de réalisation de la présente invention,
La figure 8 présente en détail une ébauche de pilier implantaire par rapport à une électrode, il peut alors possiblement s'agir d'une électrode grossière par exemple ou d'ores et déjà d'une électrode fine,
La figure 9 présente en détail un pilier implantaire par rapport à une électrode dans une configuration selon laquelle une surépaisseur de matière formant l'ébauche de connectique a été sublimée, il peut alors possiblement s'agir d'une électrode fine par exemple,
La figure 10 présente le pilier implantaire obtenu suite à la configuration de la figure 9 avec son support, retiré du plateau,
La figure 11 illustre un exemple de réalisation d'un outil de maintien d'au moins une électrode, l'outil de maintien comportant au moins une alvéole voire un agencement matriciel d'alvéoles, ici des électrodes étant fixées dans certaines des alvéoles,
Les figures 12 et 13 présentent, en perspective et de profil, un plateau, sur lequel est formée une pluralité d'ébauches de pilier implantaire, et un outil de maintien qui comporte une pluralité d'alvéoles dans lesquelles des électrodes sont fixées, avec chaque ébauche de connectique de chacune des ébauches de pilier implantaire qui est alignée par rapport à une des électrodes,
La figure 14 présente le plateau et l'outil de maintien des figures 12 et 13 dans une configuration où l'outil de maintien est rapproché du plateau pour réaliser une électroérosion d'au moins une partie de l'ébauche de connectique, comme dans la figure 8,
La figure 15 présente le plateau et l'outil de maintien des figures 12 à 14 dans une configuration où la connectique de chaque pilier implantaire est terminée, comme dans la figure 9, et
La figure 16 montre le plateau des figures 12 à 15 comportant la pluralité de piliers implantaires réalisés simultanément.

Les éléments identiques représentés sur les figures précitées sont identifiés par des références numériques identiques.

Une prothèse dentaire, dite « implanto-portée », comporte traditionnellement trois éléments principaux : une couronne (non représentée), un pilier 10 et un implant (non représenté).

L'implant, fabriqué de manière traditionnelle par usinage se comporte comme une fondation venant prendre ancrage dans l'os. Il s'agit généralement d'un élément monobloc. Pour être ancré dans l'os, il comporte souvent un pas de vis extérieur formé sur au moins un secteur inférieur. Dans un secteur supérieur et hors enfouissement intra-osseux, l'implant est souvent nanti d'une cavité permettant typiquement à un insert 30 du pilier 10 de venir s'y connecter. Pour cela, la cavité débouche donc à une extrémité supérieure de l'implant, c'est-à-dire une extrémité libre du secteur supérieur. La cavité permet les fonctions classiques d'une connectique traditionnelle qui sont, notamment, un bridage et une indexation angulaire grâce à des géométries de repositionnement. Enfin, l'implant comporte en outre généralement un moyen d'attache d'au moins le pilier dans l'implant, comme par exemple un alésage fileté dans la cavité configuré pour recevoir une vis.

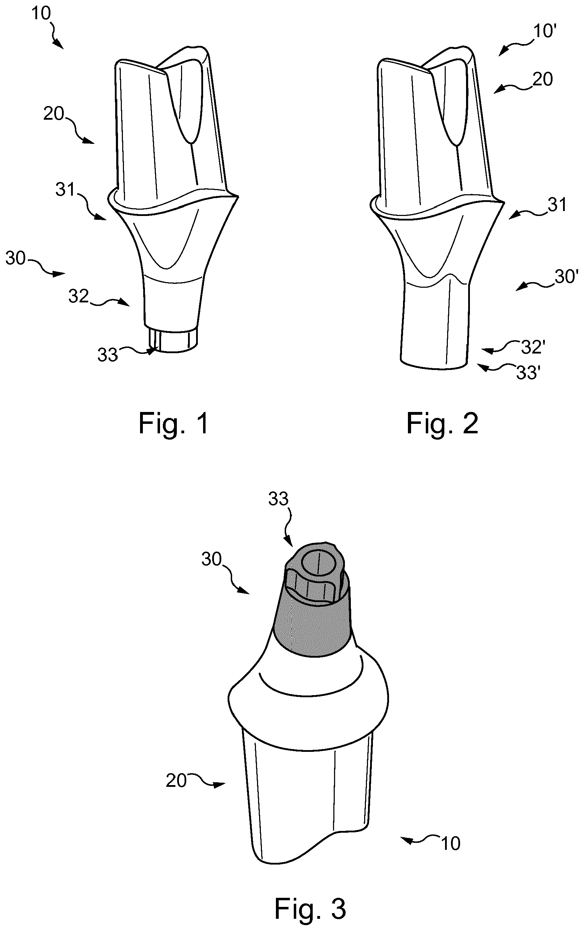

Un pilier 10 est représenté figure 1.

Un pilier forme une interface entre l'implant et la couronne. Le pilier, qualifié de dentaire ou implantaire, a un rôle prépondérant dans la réussite du cas implantaire de par le fait qu'il assure à la fois une transmission des efforts occlusaux et une composante esthétique par la cicatrisation des tissus gingivaux en garantissant le respect de l'espace biologique. Par conséquent, chaque pilier est propre à un implant et une couronne, laquelle est réalisée au cas par cas. Pour que le positionnement du pilier soit bon, il faut conformer précisément une partie basse du pilier, appelée insert, en fonction de l'implant, et une partie haute du pilier, appelée corps, en fonction de la couronne qui représente la dent à remplacer.

Le pilier 10 comporte donc ici par définition deux parties principales : un insert 30, en partie basse, et un corps 20, en partie haute, ayant un ou plusieurs sommets (ici au nombre de deux).

L'insert 30 et le corps 20 sont possiblement en tout type de matériau métallique biocompatible, par exemple du titane ou un alliage chrome-cobalt.

Afin de fixer le pilier 10 à l'implant dentaire, l'insert peut avoir différentes formes et différents profils. La gamme d'inserts permet ainsi de couvrir les différents cas cliniques rencontrés. Cependant, il peut avoir une forme générique, standard, c'est-à-dire être identique pour plusieurs piliers différents en fonction du type d'implant auquel il est destiné.

L'insert 30 comporte, par définition, une partie supérieure 31, dans un prolongement du corps 20, et une partie inférieure 32, dans un prolongement de la partie supérieure 31, qui comporte une connectique 33 configurée pour relier l'insert à l'implant, au moins axialement. Autrement dit, la partie supérieure 31 est située entre la partie inférieure 32 et le corps 20.

L'insert 30 est par exemple principalement axisymétrique, hormis la connectique 33 et, généralement, présente une forme évasée depuis la connectique en direction du corps, comme l'illustre la figure 1.

Parallèlement, le corps 20 peut présenter tout type de forme, dû au fait que les corps sont réalisés sur mesure au cas par cas en fonction de la morphologie de la dent à remplacer, c'est-à-dire de la couronne à laquelle il est destiné à être relié, ainsi que du profil de la crête osseuse et de la gencive.

Ainsi, le corps nécessite généralement d'être réalisé sur mesure tandis que l'insert peut être standard, mais l'insert comporte une connectique qui doit être réalisée précisément en vue de son assemblage avec un implant.

Pour cela, il s'est avéré particulièrement intéressant de combiner un procédé de fabrication additive, en particulier par fusion laser, avec un procédé d'électroérosion.

Et plus particulièrement, il s'est avéré particulièrement intéressant de combiner une réalisation d'une ébauche de pilier par fabrication additive, par exemple du type fusion par rayon laser ou faisceau d'électron, et une réalisation par électroérosion par enfonçage de la finition de la partie fonctionnelle, c'est-à-dire de la connectique, destinée à servir d'interface avec l'implant.

A cet effet, une fois le pilier implantaire 10 défini, par exemple tel que représenté figure 1, une surépaisseur est ajoutée sur au moins la connectique 33, voire sur une partie de la partie inférieure 32.

Une définition géométrique du pilier implantaire 10 avec cette surépaisseur permet ainsi de générer une définition d'une ébauche de pilier implantaire 10'.

En d'autres termes, après une étape de définition géométrique du pilier implantaire 10, le procédé comporte par exemple une étape de définition géométrique d'une ébauche de pilier implantaire 10'. Et par exemple dans cette étape, une surépaisseur est ajoutée autour d'au moins la connectique.

Une telle ébauche de pilier implantaire 10' est par exemple représentée figure 2.

L'ébauche de pilier implantaire 10' comporte le corps 20 et une ébauche d'insert 30'.

L'ébauche d'insert 30' comporte au moins une ébauche de connectique 33' qui correspond à la connectique 33 pourvue d'une surépaisseur.

Dans le présent exemple de réalisation, l'ébauche d'insert 30' comporte la partie supérieure 31, dans le prolongement du corps 20, et une ébauche de partie inférieure 32', dans le prolongement de la partie supérieure 31. L'ébauche de la partie inférieure 32' est par exemple formée par un surplus de matière par rapport à la définition de la partie inférieure 32 et la connectique 33. Ainsi, par définition, l'ébauche de la partie inférieure 32' comporte l'ébauche de connectique 33'.

Comme décrit par la suite, l'ébauche de connectique 33, voire l'ébauche de la partie inférieure 32' le cas échéant, est reprise par électroérosion afin de réaliser la connectique 33.

Pour réaliser dans un premier temps l'ébauche de pilier implantaire 10', une fois l'ébauche définie, une étape consiste à déterminer un positionnement de l'ébauche - indirectement du pilier 10 à réaliser - par rapport à un plateau 50 de fabrication additive.

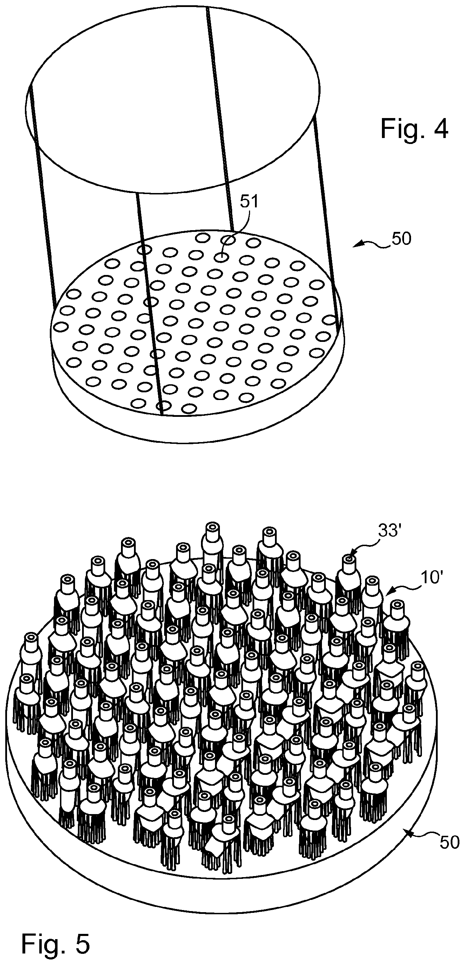

Un tel plateau 50 est par exemple illustré figure 4.

Dans un mode de mise en œuvre intéressant, la fabrication additive permet de réaliser simultanément, c'est-à-dire au cours d'une même fournée sur un même plateau, une pluralité d'ébauches de piliers implantaires.

De manière générale, « pluralité » signifie ici au moins deux ; mais, dans le présent contexte, il est possible de réaliser par exemple au moins cinq, voire dix, voire vingt ébauches de piliers simultanément.

A cet effet, sur la figure 4, le plateau 50 présente un arrangement matriciel de cercles 51 qui représentent les positions visées des futures ébauches - indirectement des piliers comme décrit ultérieurement - à réaliser.

Ainsi, dans le présent exemple, il est possible de réaliser jusqu'à 89 piliers simultanément.

Dans ce cas de réalisation simultanée d'une pluralité d'ébauches, le procédé comporte par exemple une étape de définition de la position de chaque future ébauche de pilier ainsi que leur espacement les unes par rapport aux autres.

Dans un exemple de mise en œuvre intéressant dans lequel la reprise par électroérosion est effectuée sur les ébauches conservées sur le même plateau, le positionnement des ébauches est défini en fonction des positions des électrodes utilisées ultérieurement, comme ceci est décrit par la suite, de sorte que chaque ébauche de connectique de chaque ébauche de pilier soit positionnée pour être ensuite en vis-à-vis d'une électrode.

Ensuite, une étape de réalisation d'une ébauche de pilier implantaire 10' comporte une étape de réalisation par fabrication additive d'un support 40.

Chaque support est par exemple une armature permettant un maintien et une amorce de l'ébauche de pilier correspondante.

Chaque ébauche est alors positionnée et soutenue lors de sa fabrication additive puis pour sa reprise par électroérosion.

Dans un exemple de réalisation particulièrement intéressant, le support 40 comporte des baguettes, par exemple disposée en réseau.

De telles baguettes sont ensuite par exemple facilement sécable pour les détacher du pilier une fois sa connectique réalisée.

Parallèlement à la création du support, au moins une partie du corps 20 est formée, dans un prolongement d'au moins une partie du support 40.

En d'autre terme, chaque ébauche de pilier implantaire 10' est imprimée en commençant par le corps 20 puis l'ébauche d'insert 30'. Plus précisément, chaque ébauche de pilier implantaire est formée en commençant par un sommet du corps pour terminer par l'ébauche de connectique 33'. En d'autres termes, les ébauches de pilier implantaire sont formées « la tête en bas » sur le plateau de fabrication additive. Ainsi, les ébauches de connectiques 33' sont une partie libre orientée vers le haut par rapport au plateau de fabrication additive.

La figure 5 illustre un cas de réalisation d'une pluralité d'ébauche 10' sur un même plateau 50. Mais bien entendu, seule une ébauche aurait pu avoir été formée au cours d'une fournée.

Les étapes de réalisation par fabrication additive sont par exemple réalisées dans un dispositif de fabrication additive.

Un tel dispositif (non représenté) comporte par exemple :
- une enceinte (non représentée) ;
- le plateau 50 de fabrication additive comportant au moins un emplacement de réalisation d'un pilier implantaire 10 ;
- un distributeur de matériau pulvérulent configuré pour déposer une couche de matériau pulvérulent sur le plateau 50, par exemple de matériau biocompatible, par exemple un métal biocompatible, comme du titane ou un alliage chrome-cobalt ;
- un générateur de faisceau, par exemple un faisceau laser ou un faisceau d'électrons, configuré pour fusionner des grains du matériau pulvérulent ; et
- une unité de commande configurée pour orienter le faisceau pour imprimer au moins une ébauche de pilier implantaire 10'.

Le plateau 50 et l'enceinte sont configurés pour que le plateau puisse être positionné précisément dans l'enceinte de sorte que chaque ébauche de pilier implantaire est formée à la position prédéterminée de sorte à pouvoir ensuite être en vis-à-vis d'une électrode.

Tout type de système peut convenir à cela, par exemple des pions de centrage ou des systèmes optiques d'étalonnage en position.

Après la réalisation d'au moins une ébauche de pilier implantaire 10' par fabrication additive, la connectique 33 est réalisée par électroérosion de l'ébauche de connectique 33'.

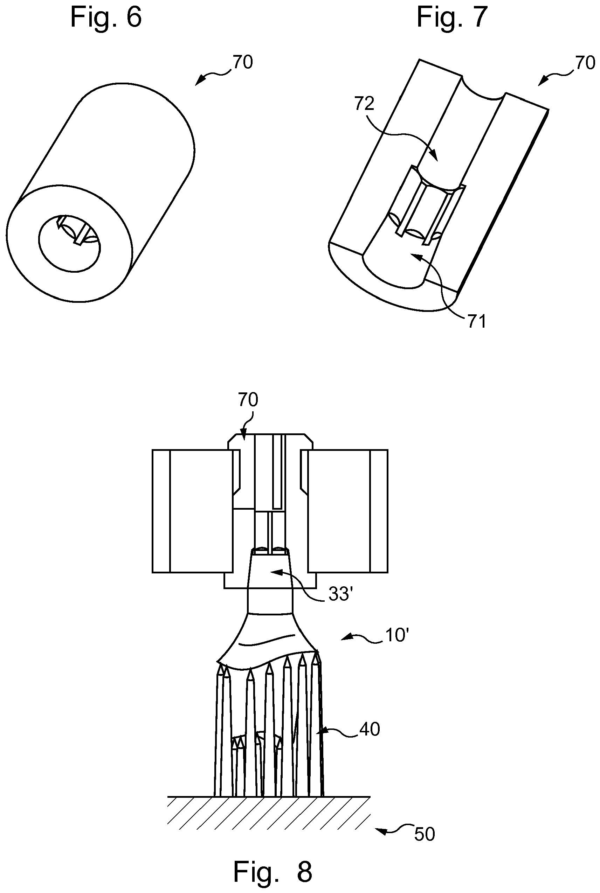

Les figures 6 et 7 présentent un exemple de réalisation d'une électrode 70.

Une électrode 70 peut être de différentes matières conductrice, par exemple métallique. A titre d'exemples non limitatif une électrode peut être en cuivre, carbure, graphite, ou encore en tungstène.

Une électrode 70 comporte par exemple une empreinte 71 représentant une forme complémentaire, c'est-à-dire en négatif, de la forme à finaliser, c'est-à-dire de la connectique.

Comme le montre plus particulièrement la figure 7, l'électrode 70 est traversée longitudinalement par un canal 72 ; autrement dit elle est percée de part en part. Ainsi, lorsqu'elle est immergée dans le liquide diélectrique lors de l'opération d'électroérosion, du liquide diélectrique peut circuler dans l'électrode.

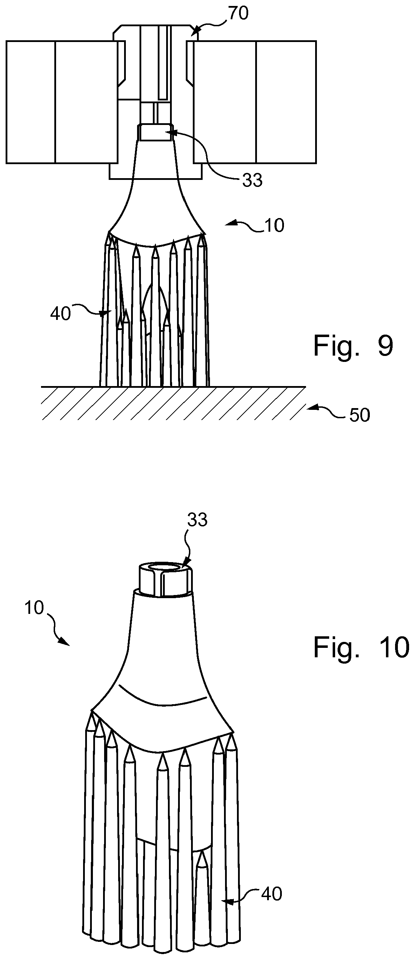

Lors de l'étape de réalisation de la connectique, l'au moins une électrode est progressivement enfoncée sur l'ébauche de connectique 33', comme l'illustrent les figures 8 et 9.

L'électrode, conductrice, est mise sous tension, par exemple à une intensité de l'ordre d'une dizaine d'ampères, dans un liquide diélectrique.

Le liquide diélectrique est par exemple un liquide synthétique ou minéral.

Lorsque l'empreinte de l'électrode parvient à l'abord de l'ébauche correspondante à usiner, elle-même conductrice, il se produit le phénomène d'étincelage permettant l'usinage de la surépaisseur jusqu'à la géométrie finale de la connectique à réaliser correspondante à celle de l'empreinte. La surépaisseur de matière correspondant à l'ébauche de connectique 33' est alors sublimée.

Le cycle d'électroérosion prend fin lorsque l'électrode arrive sur une butée mécanique correspondant à la position finale de la connectique du pilier, à une distance déterminée correspondant à la hauteur de la connectique à usiner.

A cet effet, l'électrode est par exemple possiblement approchée de l'ébauche à une première vitesse vo, dite par exemple vitesse rapide. Une telle vitesse est par exemple de l'ordre du millimètre par seconde.

Une fois au regard de l'ébauche de connectique 33', la vitesse d'approche est de préférence plus lente, par exemple de l'ordre du millimètre par heure.

Dans un exemple de réalisation particulièrement commode, l'étape de réalisation de la connectique 33 par électroérosion comporte une première étape d'électroérosion dans laquelle l'ébauche de connectique 33' est électro-érodée par une électrode dite « grossière » à une première vitesse d'approche v₁ produisant une ébauche de connectique dite « dégrossie », puis une deuxième étape d'électroérosion dans laquelle l'ébauche de connectique dégrossie est électro-érodée par une électrode dite « fine » à une deuxième vitesse d'approche v₂, la deuxième vitesse d'approche v₂ étant inférieure à, c'est-à-dire plus lente que, la première vitesse d'approche v₁.

Il y a alors deux électrodes différentes : une électrode grossière et une électrode fine.

Dans un autre exemple de réalisation particulièrement commode, il n'y a qu'une électrode utilisée, de préférence une électrode fine.

Une électrode fine est par exemple telle que l'électrode 70 des figures 6 et 7 qui comporte une forme complémentaire de la connectique à réaliser.

Une électrode grossière, non représentée, comporte donc par exemple une empreinte approchée de la forme de la connectique à réaliser.

Un pilier 10 fini, mais avec son support 40, est par exemple représenté individuellement figure 10.

Le pilier 10 est retiré du plateau 50 puis, en l'occurrence, les baguettes formant le support sont détachées du pilier.

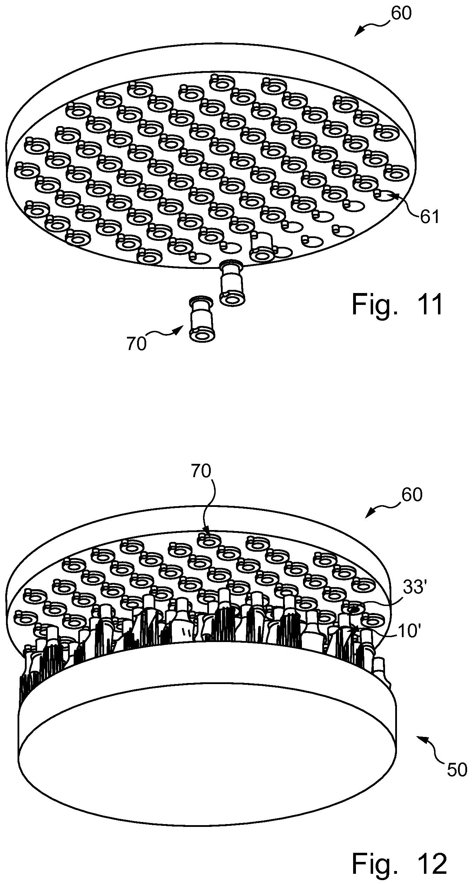

Les figures 11 à 16 illustrent un exemple de mise en œuvre de l'électroérosion lorsqu'une pluralité de piliers est à réaliser simultanément.

L'outillage pour cette opération comporte par exemple un outil de maintien 60 d'au moins une électrode qui comporte par exemple une pluralité d'alvéoles 61.

Avantageusement, les alvéoles 61 de l'outil de maintien 60 sont agencées de manière matricielle.

En outre, au moins une, voire une pluralité d'électrodes, est positionnée dans au moins une partie des alvéoles.

Les électrodes, positionnées dans des alvéoles 61 de l'outil de maintien 60, peuvent par exemple être toutes identiques.

Comme indiqué précédemment, les ébauches sont réalisées sur le plateau 50 à des positions déterminées pour être ensuite en vis-à-vis d'une électrode lors de l'étape d'électroérosion.

Ainsi, chaque électrode se retrouve à l'aplomb d'une ébauche de connectique 33' à réaliser.

Lors d'une seule phase de reprise en électroérosion, il est alors possible de traiter une pluralité de piliers implantaires, alors au stade d'ébauches, imprimés sur le plateau 50.

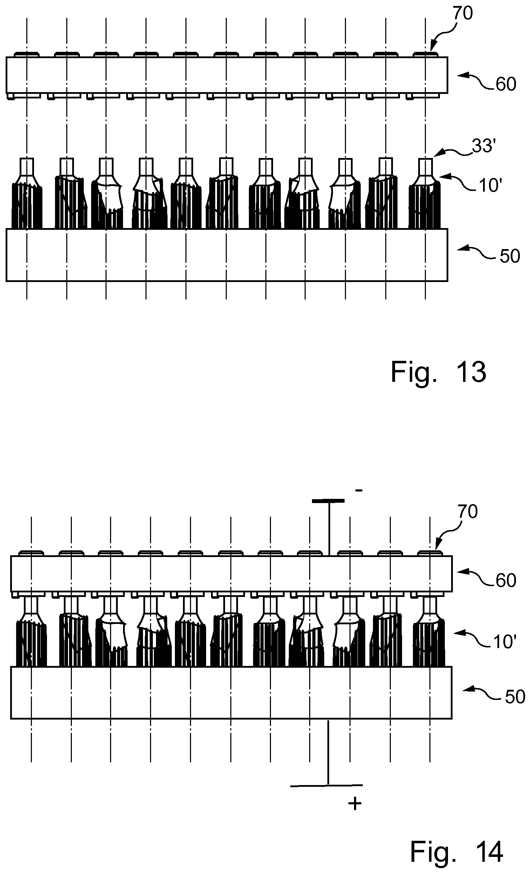

L'alignement entre chaque ébauche de pilier 10' et une électrode correspondante est représenté par un trait en pointillé sur les figures 13 à 15 à titre d'exemple.

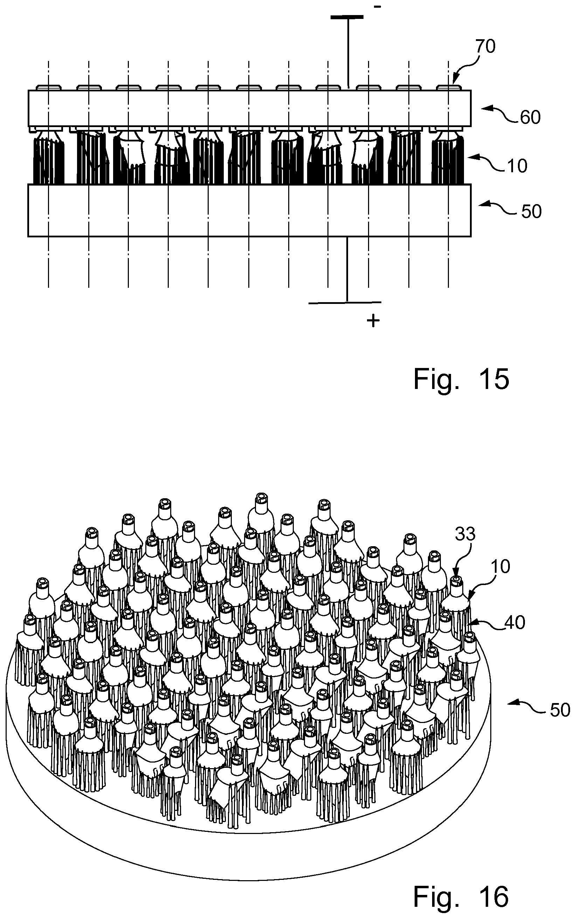

La figure 16 montre par exemple un résultat obtenu. Le plateau 50 présente une pluralité de piliers personnalisés avec leurs connectiques usinées par électroérosion par enfonçage.

Chaque pilier peut être alors retiré puis les supports détachés du pilier correspondant.

Les étapes d'électroérosion sont par exemple réalisées dans un dispositif d'électroérosion.

Un tel dispositif (non représenté) comporte par exemple :
- une enceinte (non représentée) ;
- un outil de maintien 60 d'au moins une électrode qui comporte au moins une alvéole 61 de positionnement et retenue d'une électrode ;
- au moins une électrode 70 fixée dans l'au moins une alvéole 61 de l'outil de maintien 60 ;
- un logement de réception d'un support d'au moins une ébauche de pilier implantaire (non représenté), le support étant par exemple le plateau 50 ou un support individuel le cas échéant ;
- un générateur de courant (non représenté) configuré pour mettre l'au moins une électrode sous tension ;
- un système de remplissage configuré pour remplir l'enceinte d'un liquide diélectrique ;
- un mécanisme de déplacement (non représenté) de l'outil de maintien 60 par rapport logement de réception d'un support d'au moins une ébauche de pilier implantaire, c'est-à-dire par rapport au plateau 50 ou au support individuel une fois en place ; et
- une unité de commande (non représentée) configurée pour au moins contrôler le générateur de courant et réguler le mécanisme de déplacement de l'outil de maintien par rapport au logement de réception d'un support d'au moins une ébauche de pilier implantaire, par exemple par rapport au plateau (50).

Le plateau 50, ou un support individuel, et l'enceinte du dispositif d'électroérosion sont configurés pour que le plateau, ou le support individuel, puisse être positionné précisément dans l'enceinte de sorte que chaque ébauche de pilier implantaire est à la position prédéterminée de sorte à être en vis-à-vis d'une électrode.

Tout type de système peut convenir à cela, par exemple des pions de centrage ou des systèmes optiques d'étalonnage en position.

Par exemple, le dispositif comporte un mécanisme de positionnement (non représenté) configuré pour régler en position le plateau 50, ou un support individuel, par rapport à l'outil de maintien 60 afin que chaque ébauche de connectique 33' soit alignée par rapport à une électrode.

Ainsi, dans un exemple de réalisation, le plateau 50 est retiré de l'enceinte du dispositif de fabrication additive et placé dans l'enceinte du dispositif d'électroérosion pour les opérations de reprise de l'ébauche de connectique pour réaliser la connectique.

Une étape ultérieure de finition comporte alors par exemple le retrait du support 40, ici sous forme de baguette, et éventuellement une étape de polissage de résidus d'attache du support 40.

## Revendications

1. Procédé de fabrication d'au moins un pilier implantaire (10) de prothèse dentaire, un pilier implantaire (10) comportant un insert (30) en partie basse, comportant une connectique (33) configurée pour relier le pilier (10) à un implant, et un corps (20) en partie haute configuré pour supporter une couronne, le procédé comportant :
- Une étape de réalisation d'une ébauche de pilier implantaire (10') comportant :
o Une étape de réalisation spécifique du corps (20) du pilier implantaire (10) comportant une étape de réalisation du corps par fabrication additive (20), sur un plateau (50) de fabrication additive, en commençant par un sommet du corps (20) ; et
o Une étape de réalisation d'une ébauche d'insert (30') dans un prolongement du corps (20), comportant une sous-étape de réalisation par fabrication additive d'une ébauche de connectique (33') sur le même plateau de fabrication additive ;
- L'au moins une ébauche est positionnée dans une enceinte de dispositif d'électroérosion, puis l'enceinte du dispositif d'électroérosion est close et remplie de liquide diélectrique ; et
- Une étape de réalisation de la connectique (33), comportant au moins une étape d'électroérosion de l'ébauche de connectique (33') par enfonçage d'au moins une électrode (70) sur l'ébauche de connectique (33'), l'au moins une électrode (70) comportant une empreinte (71) représentant une forme complémentaire de la connectique (33) de l'insert à réaliser.

2. Procédé selon la revendication 1, **caractérisé en ce qu'**au moins l'étape de réalisation du corps par fabrication additive comporte une étape de fusion de grains de matériau par un faisceau, par exemple un faisceau laser ou un faisceau d'électron.

3. Procédé selon l'une quelconque des revendications 1 ou 2, **caractérisé en ce qu'**au moins l'étape de réalisation du corps par fabrication additive comporte une étape d'impression d'un métal biocompatible, par exemple du chrome-cobalt ou du titane ou un alliage de titane.

4. Procédé selon l'une quelconque des revendications 1 à 3, **caractérisé en ce que** l'étape de réalisation de la connectique (33) par électroérosion comporte une première étape d'électroérosion dans laquelle l'ébauche de connectique (33') est électro-érodée par une électrode dite « grossière » à une première vitesse d'approche v1 produisant une ébauche de connectique dite « dégrossie », puis une deuxième étape d'électroérosion dans laquelle l'ébauche de connectique dégrossie est électro-érodée par une électrode dite « fine » à une deuxième vitesse d'approche v2, la deuxième vitesse d'approche v2 étant inférieure à la première vitesse d'approche v1.

5. Procédé selon la revendication 4, **caractérisée en ce que** l'électrode grossière est configurée pour réaliser un cône de la connectique (33) et l'électrode fine est configurée pour réalisation une géométrie spécifique de la connectique (33).

6. Procédé selon l'une quelconque des revendications 1 à 5, **caractérisé en ce qu'**il comporte, préalablement à l'étape de réalisation d'une ébauche de pilier implantaire (10'), une étape de définition de l'ébauche de pilier implantaire qui comporte une étape de définition géométrique du pilier implantaire (10) à réaliser et une étape de définition d'une surépaisseur au moins autour de la connectique (33) de l'insert (30).

7. Procédé selon l'une quelconque des revendications 1 à 6, **caractérisé en ce que** l'étape de réalisation d'une ébauche de pilier implantaire (10') comporte une étape de réalisation par fabrication additive d'un support (40) sous forme de baguettes (41) en réseau, au moins une partie du corps (20) étant réalisée dans un prolongement d'au moins une partie du support (40).

8. Procédé selon l'une quelconque des revendications 1 à 7, **caractérisé** :
- **en ce qu'**il comporte une pluralité d'étapes de réalisation d'une ébauche de pilier implantaire (10') simultanément configurées pour réaliser une pluralité d'ébauches de pilier implantaire (10') sur le même plateau (50) de fabrication additive ; puis
- **en ce qu'**il comporte la mise en œuvre d'une pluralité d'étapes de réalisation de la connectique (33) correspondante par électroérosion simultanément.

9. Installation pour la mise en œuvre d'un procédé de fabrication selon l'une quelconque des revendications 1 à 8, comportant un dispositif de fabrication additive et un dispositif d'électroérosion rassemblés en une seule machine;
(i) le dispositif de fabrication additive comprenant :
- un plateau (50) de fabrication additive comportant au moins un emplacement de réalisation d'une ébauche de pilier implantaire (10') ;
- un distributeur de matériau pulvérulent configuré pour déposer une couche de matériau pulvérulent sur le plateau (50) ;
- un générateur de faisceau configuré pour fusionner des grains du matériau pulvérulent, par exemple un générateur de faisceau laser ou de faisceau d'électron ; et
- une unité de commande configurée pour orienter le faisceau pour imprimer au moins une ébauche de pilier implantaire (10') ;
(ii) le dispositif d'électroérosion comprenant :
- une enceinte de dispositif d'électroérosion ;
- un outil de maintien d'au moins une électrode, lequel outil comporte au moins une alvéole de positionnement et retenue d'une électrode ;
- au moins une électrode (70) fixée dans l'au moins une alvéole de l'outil de maintien, l'au moins une électrode (70) comportant une empreinte (71) représentant une forme complémentaire de la connectique (33) de l'insert à réaliser ;
- un logement de réception d'un support d'au moins une ébauche de pilier implantaire (10') ;
- un générateur de courant configuré pour mettre l'au moins une électrode (70) sous tension ;
- un système de remplissage configuré pour remplir l'enceinte de dispositif d'électroérosion d'un liquide diélectrique ;
- un mécanisme de déplacement de l'outil de maintien par rapport au support d'au moins une ébauche de pilier implantaire ; et
- une unité de commande configurée pour au moins contrôler le générateur de courant et réguler le mécanisme de déplacement de l'outil de maintien par rapport au support d'au moins une ébauche de pilier implantaire.

10. Installation pour la mise en oeuvre d'un procédé de fabrication selon l'une quelconque des revendications 1 à 8, comportant un dispositif de fabrication additive d'une part et un dispositif d'électroérosion de l'autre ;
(i) le dispositif de fabrication additive comprenant :
- un plateau (50) de fabrication additive comportant au moins un emplacement de réalisation d'une ébauche de pilier implantaire (10') ;
- un distributeur de matériau pulvérulent configuré pour déposer une couche de matériau pulvérulent sur le plateau (50) ;
- un générateur de faisceau configuré pour fusionner des grains du matériau pulvérulent, par exemple un générateur de faisceau laser ou de faisceau d'électron ;
- une unité de commande configurée pour orienter le faisceau pour imprimer au moins une ébauche de pilier implantaire (10') ;
(ii) le dispositif d'électroérosion comprenant :
- une enceinte de dispositif d'électroérosion ;
- un outil de maintien d'au moins une électrode, lequel outil comporte au moins une alvéole de positionnement et retenue d'une électrode ;
- au moins une électrode (70) fixée dans l'au moins une alvéole de l'outil de maintien, l'au moins une électrode (70) comportant une empreinte (71) représentant une forme complémentaire de la connectique (33) de l'insert à réaliser ;
- un logement de réception d'un support d'au moins une ébauche de pilier implantaire (10') ;
- un générateur de courant configuré pour mettre l'au moins une électrode (70) sous tension ;
- un système de remplissage configuré pour remplir l'enceinte de dispositif d'électroérosion d'un liquide diélectrique ;
- un mécanisme de déplacement de l'outil de maintien par rapport au support d'au moins une ébauche de pilier implantaire ; et
- une unité de commande configurée pour au moins contrôler le générateur de courant et réguler le mécanisme de déplacement de l'outil de maintien par rapport au support d'au moins une ébauche de pilier implantaire ;
le plateau (50) étant amovible par rapport à une enceinte du dispositif de fabrication additive et configuré pour pouvoir être positionné dans l'enceinte du dispositif d'électroérosion, formant ainsi ledit support d'au moins une ébauche de pilier implantaire.

## Patentansprüche

1. Verfahren zum Herstellen zumindest eines Implantat-Abutments (10) für Zahnprothesen, wobei ein Implantat-Abutment (10) im unteren Bereich einen Einsatz (30) mit einem Verbinder (33), der dazu ausgelegt ist, das Abutment (10) mit einem Implantat zu verbinden, und im oberen Bereich einen Körper (20) enthält, der dazu ausgelegt ist, eine Krone zu tragen, wobei das Verfahren umfasst:
- einen Schritt des Ausbildens eines Implantat-Abutment-Rohlings (10'), umfassend:
• einen Schritt des spezifischen Ausbildens des Körpers (20) des Implantat-Abutments (10), umfassend einen Schritt des Ausbildens des Körpers durch additive Fertigung (20) auf einer Platte (50) zur additiven Fertigung, beginnend mit einem Scheitel des Körpers (20); und
• einen Schritt des Ausbildens eines Einsatzrohlings (30') in einer Verlängerung des Körpers (20), umfassend einen Teilschritt des Ausbildens durch additive Fertigung eines Verbinderrohlings (33') auf derselben Platte zur additiven Fertigung;
- wobei der zumindest eine Rohling in einem Gehäuse einer Elektroerosionsvorrichtung positioniert wird, wonach das Gehäuse der Elektroerosionsvorrichtung geschlossen und mit dielektrischer Flüssigkeit gefüllt wird; und
- einen Schritt des Ausbildens des Verbinders (33), umfassend zumindest einen Schritt der Elektroerosion des Verbinderrohlings (33') durch Aufstecken zumindest einer Elektrode (70) auf den Verbinderrohling (33'), wobei die zumindest eine Elektrode (70) eine Prägung (71) aufweist, die eine komplementäre Form zum Verbinder (33) des herzustellenden Einsatzes darstellt.

2. Verfahren nach Anspruch 1, **dadurch gekennzeichnet, dass** zumindest der Schritt des Ausbildens des Körpers durch additive Fertigung einen Schritt des Aufschmelzens von Materialkörnern durch einen Strahl, beispielsweise durch einen Laserstrahl oder einen Elektronenstrahl, umfasst.

3. Verfahren nach einem der Ansprüche 1 oder 2, **dadurch gekennzeichnet, dass** zumindest der Schritt des Ausbildens des Körpers durch additive Fertigung einen Schritt des Aufdruckens eines biokompatiblen Metalls, beispielweise Kobalt-Chrom oder Titan oder einer Titanlegierung, umfasst.

4. Verfahren nach einem der Ansprüche 1 bis 3, **dadurch gekennzeichnet, dass** der Schritt des Ausbildens des Verbinders (33) durch Elektroerosion einen ersten Schritt der Elektroerosion umfasst, bei dem der Verbinderrohling (33') mit einer sogenannten "groben" Elektrode mit einer ersten Annäherungsgeschwindigkeit v1 elektroerodiert wird, wodurch ein sogenannter "grober" Verbinderrohling erzeugt wird, wonach ein zweiter Schritt der Elektroerosion erfolgt, bei dem der grobe Verbinderrohling mit einer sogenannten "feinen" Elektrode mit einer zweiten Annäherungsgeschwindigkeit v2 elektroerodiert wird, wobei die zweite Annäherungsgeschwindigkeit v2 niedriger als die erste Annäherungsgeschwindigkeit v1 ist.

5. Verfahren nach Anspruch 4, **dadurch gekennzeichnet, dass** die grobe Elektrode dazu ausgelegt ist, um einen Kegel des Verbinders (33) herzustellen und die feine Elektrode dazu ausgelegt ist, um eine spezifische Geometrie des Verbinders (33) herzustellen.

6. Verfahren nach einem der Ansprüche 1 bis 5, **dadurch gekennzeichnet, dass** es vor dem Schritt des Ausbildens eines Implantat-Abutment-Rohlings (10') einen Schritt des Definierens des Implantat-Abutment-Rohlings umfasst, der einen Schritt des geometrischen Definierens des auszubildenden Implantat-Abutments (10) und einen Schritt des Definierens einer Überdicke zumindest um den Verbinder (33) des Einsatzes (30) herum umfasst.

7. Verfahren nach einem der Ansprüche 1 bis 6, **dadurch gekennzeichnet, dass** der Schritt des Ausbildens eines Implantat-Abutment-Rohlings (10') einen Schritt des Ausbildens durch additive Fertigung eines Trägers (40) in Form von vernetzten Stegen (41) umfasst, wobei zumindest ein Teil des Körpers (20) in einer Verlängerung von zumindest einem Teil des Trägers (40) ausgebildet wird.

8. Verfahren nach einem der Ansprüche 1 bis 7, **dadurch gekennzeichnet, dass**
- es eine Mehrzahl von gleichzeitig erfolgenden Schritten des Ausbildens eines Implantat-Abutment-Rohlings (10') umfasst, die dazu ausgelegt sind, um eine Mehrzahl von Implantat-Abutment-Rohlingen (10) auf derselben Platte (50) zur additiven Fertigung auszubilden;
- es das Ausführen einer Mehrzahl von gleichzeitig erfolgenden Schritten des Ausbildens des entsprechenden Verbinders (33) durch Elektroerosion umfasst.

9. Anlage zum Durchführen eines Herstellungsverfahrens nach einem der Ansprüche 1 bis 8, enthaltend eine Vorrichtung zur additiven Fertigung und eine Vorrichtung zur Elektroerosion, die in einer einzigen Maschine zusammengefügt sind;
(i) wobei die Vorrichtung zur additiven Fertigung enthält:
- eine Platte (50) zur additiven Fertigung, die zumindest eine Stelle zum Ausbilden eines Implantat-Abutment-Rohlings (10') enthält;
- eine Pulvermaterialausgabeeinrichtung, die dazu ausgelegt ist, um eine Schicht aus Pulvermaterial auf die Platte (50) aufzubringen;
- einen Strahlgenerator, der dazu ausgelegt ist, um Körner des Pulvermaterials, zu verschmelzen, wie beispielsweise einen Laserstrahlgenerator oder Elektronenstrahlgenerator; und
- eine Steuereinheit, die dazu ausgelegt ist, den Strahl auszurichten, um zumindest einen Implantat-Abutment-Rohling (10') zu drucken;
(ii) wobei die Elektroersionsvorrichtung enthält:
- ein Elektroerosionsvorrichtungsgehäuse;
- ein Werkzeug zum Halten zumindest einer Elektrode, welches Werkzeug zumindest eine Zelle zum Positionieren und Halten einer Elektrode aufweist;
- zumindest eine Elektrode (70), die in der zumindest einen Zelle des Haltewerkzeugs fixiert ist, wobei die zumindest eine Elektrode (70) zumindest eine Prägung (71) aufweist, die eine komplementäre Form zum Verbinder (33) des auszubildenden Einsatzes darstellt;
- eine Aufnahmeausnehmung zum Aufnehmen eines Trägers zumindest eines Implantat-Abutment-Rohlings (10');
- einen Stromgenerator, der dazu ausgelegt ist, die zumindest eine Elektrode (70) unter Spannung zu setzen;
- ein Füllsystem, das dazu ausgelegt ist, das Gehäuse der Elektroerosionsvorrichtung mit einer dielektrischen Flüssigkeit zu füllen;
- einen Stellmechanismus zum Verstellen des Haltewerkzeugs bezüglich des Trägers zumindest eines Implantat-Abutment-Rohlings; und
- eine Steuereinheit, die dazu ausgelegt ist, zumindest den Stromgenerator zu steuern und den Stellmechanismus zum Verstellen des Haltewerkzeugs bezüglich des Trägers zumindest eines Implantat-Abutment-Rohlings zu regeln.

10. Anlage zum Durchführen eines Herstellungsverfahrens nach einem der Ansprüche 1 bis 8, enthaltend eine Vorrichtung zur additiven Fertigung einerseits und eine Vorrichtung zur Elektroerosion andererseits;
(i) wobei die Vorrichtung zur additiven Fertigung enthält:
- eine Platte (50) zur additiven Fertigung, die zumindest eine Stelle zum Ausbilden eines Implantat-Abutment-Rohlings (10') enthält;
- eine Pulvermaterialausgabeeinrichtung, die dazu ausgelegt ist, um eine Schicht aus Pulvermaterial auf die Platte (50) aufzubringen;
- einen Strahlgenerator, der dazu ausgelegt ist, um Körner des Pulvermaterials zu verschmelzen, wie beispielsweise einen Laserstrahlgenerator oder Elektronenstrahlgenerator;
- eine Steuereinheit, die dazu ausgelegt ist, den Strahl auszurichten, um zumindest einen Implantat-Abutment-Rohling (10') zu drucken;
(ii) wobei die Elektroersionsvorrichtung enthält:
- ein Elektroerosionsvorrichtungsgehäuse;
- ein Werkzeug zum Halten zumindest einer Elektrode, welches Werkzeug zumindest eine Zelle zum Positionieren und Halten einer Elektrode aufweist;
- zumindest eine Elektrode (70), die in der zumindest einen Zelle des Haltewerkzeugs fixiert ist, wobei die zumindest eine Elektrode (70) zumindest eine Prägung (71) aufweist, die eine komplementäre Form zum Verbinder (33) des auszubildenden Einsatzes darstellt;
- eine Aufnahmeausnehmung zum Aufnehmen eines Trägers zumindest einem Implantat-Abutment-Rohlings (10');
- einen Stromgenerator, der dazu ausgelegt ist, die zumindest eine Elektrode (70) unter Spannung zu setzen;
- ein Füllsystem, das dazu ausgelegt ist, das Gehäuse der Elektroerosionsvorrichtung mit einer dielektrischen Flüssigkeit zu füllen;
- einen Stellmechanismus zum Verstellen des Haltewerkzeugs bezüglich des Trägers zumindest eines Implantat-Abutment-Rohlings; und
- eine Steuereinheit, die dazu ausgelegt ist, zumindest den Stromgenerator zu steuern und den Stellmechanismus zum Verstellen des Haltewerkzeugs bezüglich des Trägers zumindest eines Implantat-Abutment-Rohlings zu regeln;
wobei die Platte (50) bezüglich eines Gehäuses der Vorrichtung zur additiven Fertigung abnehmbar ausgeführt und dazu ausgelegt ist, in dem Gehäuse der Elektroerosionsvorrichtung positioniert werden zu können, wodurch sie somit den Träger zumindest eines Implantat-Abutment-Rohlings bildet.

## Claims

1. A method for manufacturing at least one dental prosthesis implant abutment (10), an implant abutment (10) comprising an insert (30) in the lower part, comprising a connector (33) configured to connect the abutment (10) to an implant, and a body (20) in the upper part configured to support a crown, the method comprising:
- a step of producing an implant abutment blank (10'), comprising
∘ a specific step of producing the body (20) of the implant abutment (10), comprising a step of producing the body by additive manufacturing (20), on an additive manufacturing substrate (50), starting with the top of the body (20); and
∘ a step of producing an insert blank (30') as an extension of the body (20), comprising a sub-step of producing a connector blank (33') by additive manufacturing on the same additive manufacturing substrate;
- at least one blank being positioned in a spark erosion machining apparatus enclosure, the spark erosion machining apparatus enclosure then being closed and filled with dielectric fluid; and
- a step of producing the connector (33), comprising at least one step of spark erosion machining the connector blank (33') by sinking at least one electrode (70) onto the connector blank (33'), the at least one electrode (70) comprising a cavity (71) representing a negative of the connector (33) of the insert to be produced.

2. A method according to claim 1, **characterised in that** at least the step of producing the body by additive manufacturing comprises a step of melting granular material using a beam, for example a laser beam or an electron beam.

3. A method according to either one of claims 1 or 2, **characterised in that** at least the step of producing the body by additive manufacturing comprises a step of printing a biocompatible metal, for example chromium-cobalt or titanium or a titanium alloy.

4. A method according to any one of claims 1 to 3, **characterised in that** the step of producing the connector (33) by spark erosion machining comprises a first spark erosion machining step in which the connector blank (33') is spark-eroded by a "rough" electrode at a first approaching speed v1 producing a "rough-machined" connector blank, then a second spark erosion machining step in which the rough-machined connector blank is spark-eroded by a "fine" electrode at a second approaching speed v2, the second approaching speed v2 being less than the first approaching speed v1.

5. A method according to claim 4, **characterised in that** the rough electrode is configured to produce a cone for the connector (33) and the fine electrode is configured to produce a specific geometry of the connector (33).

6. A method according to any one of claims 1 to 5, **characterised in that** it comprises, prior to the step of producing an implant abutment blank (10'), a step of defining the implant abutment blank, which comprises a step of defining the geometry of the implant abutment (10) to be produced and a step of defining an excess thickness at least around the connector (33) of the insert (30).

7. A method according to any one of claims 1 to 6, **characterised in that** the step of producing an implant abutment blank (10') comprises a step of producing by additive manufacturing a support (40) in the form of a network of rods (41), at least one part of the body (20) being produced as an extension of at least one part of the support (40).

8. A method according to any one of claims 1 to 7, **characterised**:
- **in that** it comprises a plurality of steps of producing an implant abutment blank (10') simultaneously configured to produce a plurality of implant abutment blanks (10') on the same additive manufacturing substrate (50); then
- **in that** it comprises carrying out a plurality of steps of producing the corresponding connector (33) simultaneously by spark erosion machining.

9. An installation for carrying out a manufacturing method according to any one of claims 1 to 8, comprising an additive manufacturing apparatus and a spark erosion machining apparatus combined in a single machine;
(i) the additive manufacturing apparatus comprising:
- an additive manufacturing substrate (50) comprising at least one station for production of an implant abutment blank (10');
- a pulverulent material distributor configured to deposit a layer of pulverulent material on the substrate (50);
- a beam generator configured to melt granular pulverulent material, for example a laser beam or electron beam generator; and
- a control unit configured to orient the beam for printing at least one implant abutment blank (10');
(ii) the spark erosion machining apparatus comprising:
- a spark erosion machining apparatus enclosure;
- a tool for holding at least one electrode, which tool comprises at least one electrode positioning and retention socket;
- at least one electrode (70) fixed in the at least one holding tool socket, the at least one electrode (70) comprising a cavity (71) representing a negative of the connector (33) of the insert to be produced;
- a receptacle for receiving a support for at least one implant abutment blank (10');
- a current generator configured to energize the at least one electrode (70);
- a filling system configured to fill the spark erosion machining apparatus enclosure with a dielectric fluid;
- a mechanism for moving the holding tool relative to the support of at least one implant abutment blank; and
- a control unit configured at least to control the current generator and regulate the mechanism for moving the holding tool relative to the support of at least one implant abutment blank.

10. An installation for implementing a manufacturing method according to any one of claims 1 to 8, comprising an additive manufacturing apparatus on the one hand, and a spark erosion machining apparatus on the other;
(i) the additive manufacturing apparatus comprising:
- an additive manufacturing substrate (50) comprising at least one station for production of an implant abutment blank (10');
- a pulverulent material distributor configured to deposit a layer of pulverulent material on the substrate (50);
- a beam generator configured to melt granular pulverulent material, for example a laser beam or electron beam generator;
- - a control unit configured to orient the beam for printing at least one implant abutment blank (10');
(ii) the spark erosion machining apparatus comprising:
- a spark erosion machining apparatus enclosure;
- a tool for holding at least one electrode, which tool comprises at least one electrode positioning and retention socket;
- at least one electrode (70) fixed in the at least one holding tool socket, the at least one electrode (70) comprising a cavity (71) representing a negative of the connector (33) of the insert to be produced;
- a receptacle for receiving a support for at least one implant abutment blank (10');
- a current generator configured to energize the at least one electrode (70);
- a filling system configured to fill the spark erosion machining apparatus enclosure with a dielectric fluid;
- a mechanism for moving the holding tool relative to the support of at least one implant abutment blank; and
- a control unit configured at least to control the current generator and regulate the mechanism for moving the holding tool relative to the support of at least one implant abutment blank;
the substrate (50) being removable relative to an additive manufacturing apparatus enclosure and configured to be positionable in the spark erosion machining apparatus enclosure, thereby forming said support for at least one implant abutment blank.
